# EUROPEAN PATENT APPLICATION

(11) **EP 3 978 768 A1**
(43) Date of publication of application: **06.04.2022**
(21) Application number: 20199201.3
(22) Date of filing: 30.09.2020
(51) Int. Cl.: F16B 13/06, F16B 37/14

(54) **EXPANSION ANCHOR WITH CAP NUT HAVING YIELDING STOPPER**

(71) Applicant: Hilti Aktiengesellschaft, 9494 Schaan (LI)
(72) Inventor: Spampatti, Matteo, 9470 Buchs (CH); Sanchez Lopez, Marco, 9000 St Gallen (CH); Loher, Markus, 9000 St. Gallen (CH); Bencsik, Gábor Menyhért, 6035 Ballószög (HU)
(74) Representative: Hilti Aktiengesellschaft Corporate Intellectual Property

(57) **Abstract**

The invention relates to an anchor arrangement comprising an expansion anchor and a cap nut arranged on the anchor rod of the expansion anchor. The cap nut comprises a yielding stopper that is configured to limit advancement of the anchor rod into the cavity of the cap nut at low cap nut torque and to yield to higher cap nut torque so as to permit the anchor rod to advance deeper into the cavity. The invention also relates to a corresponding cap nut.

## Description

The invention relates to an anchor arrangement including an expansion anchor and a cap nut, according to the preamble of claim 1. Moreover, the invention relates to a cap nut which can be used in such an anchor arrangement.

DE2815998 A1 discloses an expansion anchor that has a two-piece anchor rod comprising a rear piece and a tip piece. The anchor is installed by rotating the rear piece with respect to the separate tip piece. The anchor rod has an internal screw drive mechanism, which transforms this rotation into a linear motion of the separate tip piece, which in turn actuates a wedge mechanism that is located at the tip piece. A cap nut is provided in order to rotate the rear piece of the anchor nut. This cap nut has a breakable part located within its cavity. This breakable part breaks when a pretrained torque is achieved, thereby giving the installer haptic feedback that installation is complete. Another anchor with an internal screw drive mechanism is disclosed in GB1442292 A.

Another, common type of expansion anchors is lacking an internal screw drive within the anchor rod. In other words, the wedge is connected to the rear region of the anchor rod in rotationally fixed manner. This type of expansion anchor is installed by axially tensioning the rear region of the anchor rod, wherein the axial tension is transferred, via the anchor rod, to the front region of the anchor rod, where the wedge mechanism is located. Axial tensioning of the rear region can be effected by a screw drive mechanism constituted by an external screw thread provided on the rear region of the anchor rod, and by a mating internal screw thread provided on a nut. Accordingly, rotation of the nut on the anchor rod causes axial tensioning of the anchor rod. Whereas the nut is often a standard nut, EP3330550 A1 teaches to use a cap nut. If a cap nut is used, it has to be ensured that the cavity of the cap nut provides sufficient remaining depth in order to accommodate the axial displacement of the anchor rod that is required in order to operate the wedge mechanism. EP3330550 A1 therefore proposes to use an anchor-placement tool that positions the anchor rod in a position which provides sufficient remaining depth. After the anchor rod has been positioned by means of the anchor-placement tool, the cap nut is screwed onto the anchor rod and is subsequently tightened.

JP3109962 U discloses the use of a cap nut to drive a pin into an anchor.

DE102004005459 A1 describes the use of a cap nut in connection with the process of removing an anchor.

It is an object of the invention to provide particular easy, fast and reliable installation of an expansion anchor (of that type intended to be installed by rotating a nut with respect to the anchor rod) by means of a cap nut.

This object is achieved by an anchor arrangement according to claim 1 and a cap nut according to claim 9. Dependent claims refer to preferred embodiments of the invention.

An anchor arrangement comprises
- an expansion anchor, which comprises a wedge member and an anchor rod, wherein the anchor rod has a wedge for wedging the wedge member, and wherein the anchor rod has a threaded region, in which the anchor rod is provided with an external screw thread defining a nut tightening direction of rotation, wherein the wedge is connected to the threaded region in rotationally fixed manner, at least when the threaded region is rotated in the nut tightening direction of rotation, and
- a cap nut comprising a body, which has a cavity that accommodates at least a part of the threaded region of the anchor rod of the expansion anchor, and an internal screw thread, which projects into the cavity, and which mates with the external screw thread of the anchor rod,
   and is characterized in that
- the cap nut further comprises a yielding stopper that is configured to limit advancement of the anchor rod into the cavity of the cap nut at low cap nut torque and to yield to higher cap nut torque so as to permit the anchor rod to advance deeper into the cavity.

The invention relates to that type of anchors in which the wedge is connected to the threaded region to co-rotate with the threaded region (at least when the threaded region is rotated in the nut tightening direction of rotation). Thus, the invention relates to the type of anchors that have an (at least mostly) rigid anchor rod, which is in contrast to the anchors described in DE2815998 A1, whose anchor rods have an internal screw drive mechanism. Whereas both anchor types can be installed by using cap nuts, the inventive anchor type requires the cap nut to freely rotate on the anchor during installation, so that the anchor rod can be drawn deeper into the cap nut, whereas the anchor type of DE2815998 A1 requires the cap nut to sit tightly on the anchor rod. This is since in an inventive anchor type, the axial displacement of the wedge is caused by the screw drive mechanism formed between the cap nut and the anchor rod, whereas in an anchor of the type of DE2815998 A1, axial displacement of the wedge is caused by the internal screw drive mechanism located within the anchor rod.

In connection with the invention, it is proposed to provide the cap nut used in connection with the inventive anchor type with a stopper, which stopper initially prevents the anchor rod from entering too deep into the cavity of the cap nut, wherein the stopper is, however, yielding, so that it can be overcome by the higher torque that arise during the installation process. In particular, the stopper can define a pre-determined pre-installation position, in which a) the anchor rod is located sufficiently deep within the cavity to provide sufficiently long thread engagement in order to prevent overloading of the thread engagement during subsequent hammering-in, and in which b) there is sufficient room for the anchor rod to advance deeper into the cavity, so that the wedge mechanism can be fully deployed before the anchor rod hits the bottom of the cavity. The stopper thus allows particularly efficient installation of the anchor. In a first step, the installer (or alternatively the manufacturer before shipment) tightens the cap nut until the anchor rod abuts against the stopper. The anchor rod is then in the correct pre-installation position. Subsequently, the installer inserts the anchor into the borehole and then further tightens the cap nut in order to operate and expand the wedge mechanism. The torque required in this process causes the stopper to yield (in particular to collapse), which provides the room within the cavity necessary for reliable operation of the wedge mechanism.

It is thus possible to pre-assemble the anchor arrangement before installation, and, in particular, no anchor-placement tool as described in EP3330550 A1 is necessary, since the stopper provides the correct positioning. Accordingly, the expansion anchor can be installed in a particular easy, fast and reliable manner.

The stopper is yielding, i.e. it is configured to give way under physical force, in particular under physical force generated by torqueing the cap nut with respect to the anchor rod. Preferably, the stopper can be configured to yield at a threshold torque. Alternatively, the stopper can be configured to yield gradually, e.g. linearly, to torque, i.e. the torque increases linearly as the anchor rod advances deeper into the cavity. In this case, the stopper could be foam type. In a preferred embodiment, all of the stopper can be located with the cavity of the cap nut. However, parts of the stopper can also be located outside of the cavity (for example if a through pin is employed as stopper).

The anchor rod preferably consists of metal, in particular steel, more particular stainless steel or carbon steel, which might also be coated. The wedge member preferably consists of metal, in particular steel, more particular stainless steel or carbon steel, which might also be coated. The wedge member is preferentially an expansion sleeve that surrounds the anchor rod. The wedge tapers towards the threaded region of the anchor rod. The threaded region might axially extend to the wedge, but there might be also at least one unthreaded region located in-between the threaded region and the wedge. The wedge is preferentially an expansion cone. The nut tightening direction of rotation is that direction in which a nut screwed onto the external thread needs to be rotated in order to tighten the nut, i.e. in order to advance the nut closer to the wedge; if the external screw thread is right-handed, this would be the clockwise direction.

The wedge is connected to the threaded region in rotationally fixed manner, at least when the threaded region is rotated in the nut tightening direction of rotation. Accordingly, there is a torque-proof connection between the threaded region of the anchor rod and the wedge at least when the threaded region is rotated in the nut tightening direction of rotation. Accordingly, the anchor rod does not have an internal screw drive for operating the wedge mechanism. A torque-proof connection in said direction only is sufficient to permit the intended mode of installation, but nevertheless allows to use screwed-together multi-part anchor rods (which multi-part anchor rods might be advantageous from a manufacturing point of view, especially for larger anchor sizes). Preferably, however, the wedge is connected to the threaded region in rotationally fixed manner in both directions of rotation, i.e. when the threaded region is rotated in the nut tightening direction of rotation and when the threaded region is rotated in the direction of rotation opposite to the nut tightening direction of rotation. In particular, the anchor rod can be monolithic, which might, amongst others, be favourable in view of mass manufacturing at low effort. If monolithic, the anchor rod consists of one piece, is solid and unbroken, is manufactured from the same piece of material and/or arranged without joints or seams.

The body of the cap nut preferably consists of metal, in particular steel, especially preferred stainless steel or carbon steel, which might be optionally coated. The cavity of the cap nut is a blind hole, which houses the rear end of the anchor rod. In the described anchor arrangement that comprises the expansion anchor as well as the cap nut screwed onto the anchor rod, the threaded region of the anchor rod is located closer to the cap nut than the wedge is. The internal screw thread of the cap nut mates with the external screw thread of the anchor rod, i.e. the respective screw threads have corresponding dimensions to allow screw engagement. In particular, the body of the cap nut has external drive flats for wrench engagement, more preferably six drive flats. The drive flats can surround the cavity.

Throughout this document - wherever the terms "axially", "longitudinally", "radially" and "circumferentially" are used, they could refer, in particular, to the longitudinal axis of the anchor rod, which coincides with the longitudinal axis of the cavity of the cap nut. The longitudinal axis of the anchor rod extends through the tip end and through the rear end of the anchor rod.

The yielding stopper could be configured to yield e.g. by twisting, shearing or/and compressing. It is particularly preferred that the yielding stopper is configured to yield through breaking. Accordingly, the yielding stopper is configured to limit advancement of the anchor rod into the cavity of the cap nut at low cap nut torque and to break at higher cap nut torque so as to permit the anchor rod to advance deeper into the cavity. In particular, the yielding stopper breaks at a threshold cap nut torque so as to allow the anchor rod to advance deeper into the cavity. A breakable stopper can be advantageous in view of manufacturing, in view of reliability and/or in view of haptic feedback. Alternatively, the yielding stopper could for example be yielding through bending or stretching. If the yielding stopper is configured to yield through breaking, it could have one or more braking points. Preferably, it has two breaking points.

Advantageously, the stopper is configured to yield at a cap nut torque between 0.5 Nm and 10 Nm, preferably between 1 Nm and 5 Nm, more preferably between 2 Nm and 5 Nm, with respect to the anchor rod. Accordingly, the following condition applies to the tightening torque τ_{yield} at which the stopper is configured to yield:
0.5 Nm <= τ_{yield} <= 10 Nm, preferably 1 Nm <= τ_{yield} <= 5 Nm, more preferably 2 Nm <= τ_{yield} <= 5 Nm.
This embodiment considers two limitations:
- A human usually has the capability to apply a maximum of around 2 Nm on a nut by hand. By choosing τ_{yield} higher, a risk of inadvertent activation of the stopper is mitigated.
- In order that the expansion anchor will not significantly spin in the borehole, the stopper must yield as soon as possible

The stopper defines a thread engagement stopper depth dₑ, which is the length of thread engagement between cap nut and anchor rod that is present when the (unyielded) stopper stops the anchor rod from advancing deeper into the cavity. Preferably, the thread engagement stopper depth dₑ is between 0.5 times and 1.5 times the nominal diameter of the expansion anchor. Accordingly, the following condition applies to the thread engagement stopper depth dₑ:
0.5 * nominal anchor diameter <= dₑ <= 1.5 * nominal anchor diameter
This can allow particular reliable and efficient operation.

The stopper also defines a remaining anchor rod advancement depth dᵣ, which is the additional path available to the anchor rod once the stopper has yielded. Preferably, the remaining anchor rod advancement depth is between 0.25 times and 2.5 times the nominal diameter of the expansion anchor. Accordingly, the following condition applies to the remaining depth dᵣ:
0.25 * nominal anchor diameter <= dᵣ <= 2.5 * nominal anchor diameter.
This can allow particular reliable and efficient operation.

In particular, the anchor rod abuts against the stopper and the stopper abuts against the body. This is the intended pre-installation configuration, in which the anchor arrangement is intended to be hammered into the borehole. More preferably, the stopper can put the anchor rod under tension. Having a pre-tension in the system can counteract undesired rotation of the cap nut during hammering-in. Preferably, the anchor arrangement is located outside of a borehole or within a borehole in this stage

The anchor rod can, in particular, be monolithic, which can be advantageous in view of manufacturing, as already mentioned above.

As already mentioned above, the stopper allows the combination of anchor and cap nut to be shipped, with the cap nut screwed onto the anchor rod of the anchor. Accordingly, the anchor arrangement might also comprise a shipping box, in which the expansion anchor and the cap nut are located in the described state. Accordingly, the anchor and the cap nut are configured for shipping as intended.

The invention also relates to a cap nut, in particular a cap nut intended to be used in the described anchor arrangement. Such a cap nut can comprise a body, which has a cavity for accommodating the anchor rod of an expansion anchor, and an internal screw thread, which projects into the cavity, and can be characterized in that the cap nut further comprises a yielding stopper that is configured to limit advancement of the anchor rod into the cavity of the cap nut at low cap nut torque and to yield to higher cap nut torque so as to permit the anchor rod to advance deeper into the cavity.

Preferentially, the yielding stopper is telescopically yielding. Accordingly, the stopper has at least two parts, wherein one of the parts advances into the other as the stopper yields, i.e. the stopper collapses in a telescoping manner as it yields. This can be advantageous from a manufacturing point of view. In other embodiments, the stopper can be a through pin in the cap nut or others.

In particular, the stopper can consist of a plastic material. Such a plastic material can be crushed relatively easily by the anchor rod, thereby providing additional depth for the anchor rod.

According to another preferred embodiment of the invention, the body has a hardness of 300 HV10 or larger. Consequently, the cap nut has relatively high hardness. This embodiment takes into account that that anchor arrangement is intended for being hammered into the borehole with the cap nut mounted on the anchor rod, and that the cap nut will thus be subjected to hammer blows. Providing the cap nut with high hardness can allow it to absorb these hammer blows in a particular good manner.

It is also particularly preferred that the body has a flat top. This embodiment takes into account that that anchor arrangement is intended for being hammered into the borehole with the cap nut mounted on the anchor rod, and that the cap nut will thus be subjected to hammer blows. Providing the cap nut with a flat top allows particular efficient transfer of hammer blows.

Features that are described here in connection with the anchor arrangement can also be used in connection with the cap nut and features that are described here in connection with the cap nut can also be used in connection with the anchor arrangement. In particular, the described cap nut is the cap nut which is used in the anchor arrangement.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a side view (with the body of the cap nut and with the substrate cut) of an anchor arrangement comprising an expansion anchor and a cap nut, in a state after the anchor arrangement has been hammered into a borehole in a substrate, but before tightening of the cap nut.
Figure 2 is a side view (again with the body of the cap nut and with the substrate cut) of the anchor arrangement of figure 1, in a state after the cap nut has been tightened in order to anchor the expansion anchor and after the stopper has yielded to the corresponding cap nut torque.
Figure 3 is an isometric view of the cap nut used in the anchor arrangement of figures 1 and 2.
Figure 4 is a sectional view of the cap nut used in the anchor arrangement of figures 1 and 2.
Figure 5 is a sectional view of an alternative embodiment of a cap nut that can be used in the anchor arrangement of figures 1 and 2.

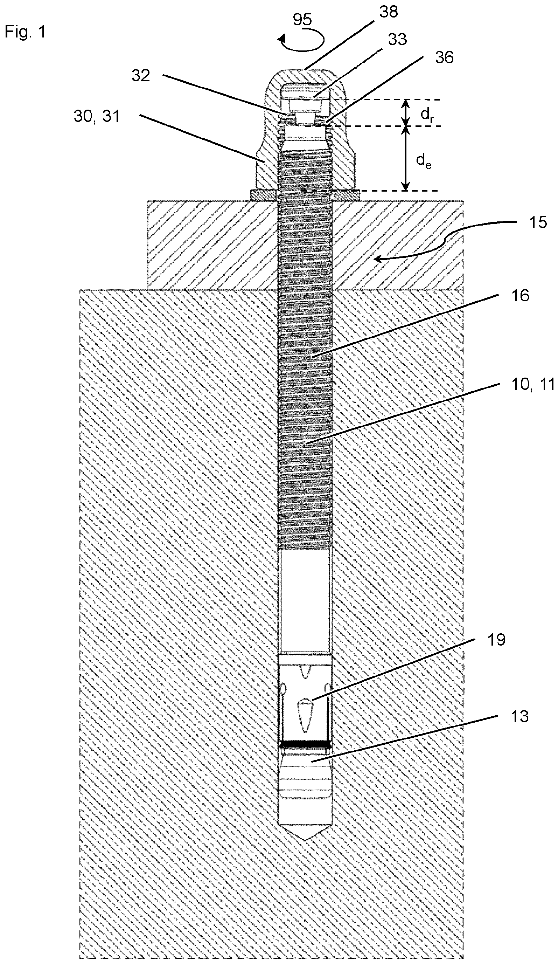

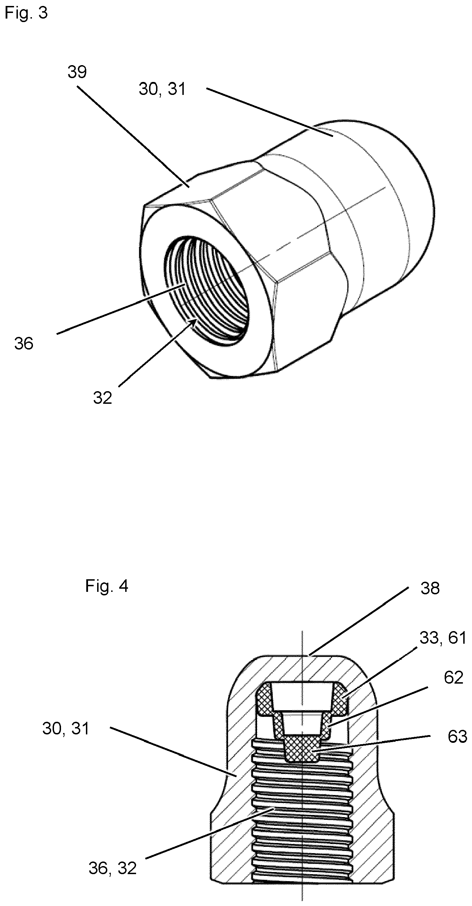

Figures 1 to 4 illustrate an embodiment of an anchor arrangement. The arrangement comprises an expansion anchor 10, which in term comprises an elongate anchor rod 11. The anchor rod 11 has, close to its tip end, a wedge 13, and, close to its rear end, a threaded region 15, in which the anchor rod 11 is provided with an external screw thread 16, which is, by way of example, right-handed. The external screw thread 16 defines a nut tightening direction of rotation 95, which is the direction in which a nut, which engages the external screw thread 16, needs to be rotated in order to tighten the nut, i.e. in order to advance it closer towards the wedge 13. Since the external screw thread 16 is, by way of example, right-handed, this nut tightening direction of rotation 95 is the clockwise direction in the present embodiment.

The expansion anchor 10 furthermore comprises a wedge member 19, which is arranged adjacent to the anchor rod 11, and which is intended to be wedged radially outwardly by the wedge 13 in order to anchor the expansion anchor 10 in the surrounding substrate. In the present embodiment, the wedge member 19 is, by way of example, an expansion sleeve, which surrounds the anchor rod 11 in C-shape manner. The wedge 13 tapers towards the threaded region 15 (i.e. rearwardly), and is intended to wedge the wedge member 19 radially outwardly as the anchor rod 11 is displaced rearwardly (i.e. in the direction that points form the wedge 13 to the threaded region 15) with respect to the wedge member 19. By way of example, the wedge 13 is an expansion cone.

The arrangement furthermore comprises a cap nut 30. The cap nut comprises a body 31, in which a cavity 32, which accommodates the rear end of the anchor rod 11, is provided. The cavity 32 is a blind hole. The body 31 has an internal screw thread 36, which projects into the cavity 32, and which matches the external screw thread 16 of the anchor rod 11. External drive flats 39, six in the present embodiment, are provided on the outer surface of the body 31. These drive flats 39 are intended for being engaged by a wrench, in order to rotationally drive the cap nut 30. The drive flats 39 form a ring that surrounds the cavity 32. The body 31 is provided with a flat top 38.

A yielding stopper 33 is arranged within the cavity 32. In the present embodiment, the stopper 33 is telescopically yielding and comprises a ring-like bottom part 61, a ring-like middle part 62 and a tip part 63, wherein the middle part 62 is configured so that the tip part 63 can enter into the middle part 62, and wherein the bottom part 61 is configured so that the middle part 62 and the tip part 63 can enter into the bottom part 61. The bottom part 61 is connected to the middle part 62 and the middle part is connected to the tip part 63 by respective breakable connections, which are configured to break once a threshold axial force is reached. Accordingly, the yielding stopper 33 is yielding through breaking in the present embodiment.

The yielding stopper 33 defines a thread engagement depth dₑ, which is the length of thread engagement between the anchor rod 11 and the cap nut 30 when the anchor rod 11 abuts against the intact yielding stopper 33 (and when the yielding stopper 33 abuts against the body 31, preferably at the bottom of the cavity 32), as shown in figure 1. The thread engagement depth dₑ is between 0.5 times and 1.5 times the nominal diameter of the expansion anchor 10. The yielding stopper 33 also defines a remaining depth dᵣ, which is the axial length available to the anchor rod 11 for advancing deeper into the cavity 32 once the yielding stopper 33 yields. The remaining depth dᵣ is between 0.5 times and 2.5 times the nominal diameter of the expansion anchor 10. Preferentially, the yielding stopper 33 can consist of a plastic material, which can be crushed by the anchor rod 11, thereby increasing the remaining depth dᵣ of the cavity 32.

In use, the cap nut 30 is screwed onto the anchor rod 11 until the anchor rod 11 abuts against the yielding stopper 33 (and the yielding stopper 33 counter-bears against the body 31, preferably at the bottom of the cavity 32), to give the anchor arrangement configuration shown in figure 1. This assembly step can for example be performed at the construction site, but it could also be performed before shipping of the anchor arrangement.

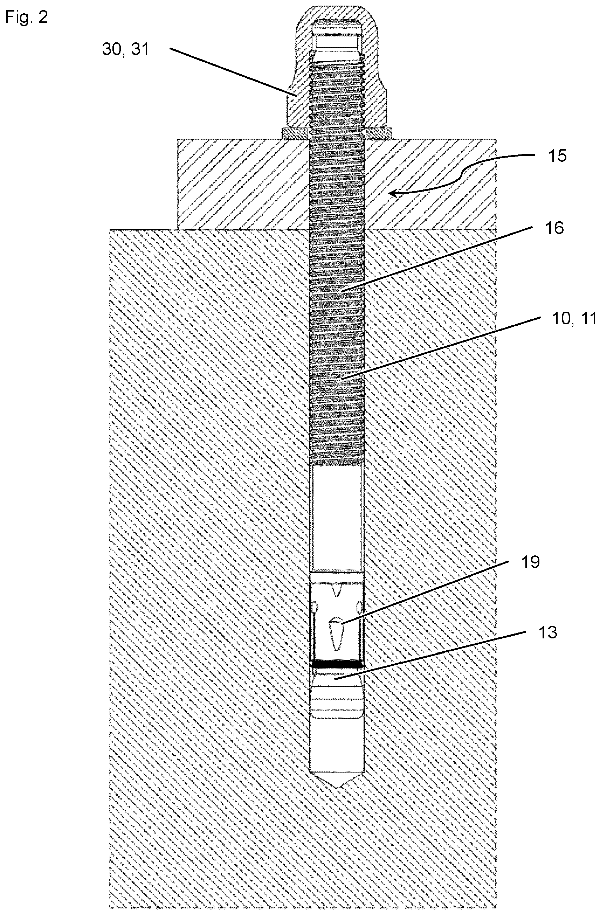

The expansion anchor 10 is then pushed (in particular hammered), tip end first, into a borehole, as shown in figure 1. Subsequently, the cap nut 30 is rotationally tightened in the nut tightening direction of rotation 95, in particular by means of a wrench engaging the drive flats 39. Tightening of the cap nut 30, which bears against the substrate in which the threaded anchor rod 11 is located, operates a screw drive mechanism that is formed between the internal screw thread 36 of the cap nut 30 and the external screw thread 16 of the anchor rod 11, which in term pulls the anchor rod 11 out of the borehole, causing the wedge 13 to wedge the wedge member 19 outwards, thereby anchoring the expansion anchor in the borehole. The stopper 33 will collapse during the process of tightening the cap nut 30, thereby allowing the anchor rod 11 to advance deep into the cavity 32 of the cap nut 30, which provides the axial clearance required for pulling the anchor rod 11 out of the borehole and operating the wedge mechanism. The resulting state is shown in figure 2.

In order to allow said mode of installation, in which axial displacement of the wedge 13 is caused by a screw drive mechanism formed between the internal screw thread 36 of the cap nut 30 and the external screw thread 16 of the anchor rod 11, the wedge 13 is connected to the threaded region 15 to co-rotate with the threaded region 15 when the threaded region 15 is rotated in the nut tightening direction of rotation 95. In the present embodiment, this is achieved by means of a monolithic anchor rod 11, which includes both the wedge 13 and the threaded region 15.

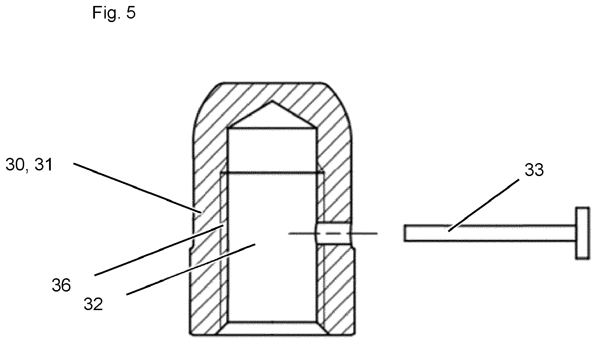

The cap nut 30 shown in figures 1 to 4 could be substituted by the cap nut 30 shown in figure 5 in the anchor arrangement of figures 1 and 2. The cap nut 30 of figure 5 uses a different type of yielding stopper 33. Instead of being telescopic, the stopper 33 of figure 5 is a breakable through pin that extends through the cavity 32, preferably radially.

## Claims

1. Anchor arrangement comprising
- an expansion anchor (10), which comprises a wedge member (19) and an anchor rod (11), wherein the anchor rod (11) has a wedge (13) for wedging the wedge member (19), and wherein the anchor rod (11) has a threaded region (15), in which the anchor rod (11) is provided with an external screw thread (16) defining a nut tightening direction of rotation (95), wherein the wedge (13) is connected to the threaded region (15) in rotationally fixed manner, at least when the threaded region (15) is rotated in the nut tightening direction of rotation (95), and
- a cap nut (30) comprising a body (31), which has a cavity (32) that accommodates at least a part of the threaded region (15) of the anchor rod (11) of the expansion anchor (10), and an internal screw thread (36), which projects into the cavity (32), and which mates with the external screw thread (16) of the anchor rod (11),
**characterized in that**
- the cap nut (30) further comprises a yielding stopper (33) that is configured to limit advancement of the anchor rod (11) into the cavity (32) of the cap nut (30) at low cap nut (30) torque and to yield to higher cap nut torque so as to permit the anchor rod (11) to advance deeper into the cavity (32).

2. Anchor arrangement according to claim 1,
**characterized in that**
the yielding stopper (33) is configured to yield through breaking.

3. Anchor arrangement according to any one of the preceding claims,
**characterized in that**
the stopper (33) is configured to yield at a cap nut (30) torque between 0.5 Nm and 10 Nm, preferably between 2 Nm and 5 Nm, with respect to the anchor rod (11).

4. Anchor arrangement according to any one of the preceding claims,
**characterized in that**
the stopper (33) defines a thread engagement stopper depth (dₑ), which is between 0.5 times and 1.5 times the nominal diameter of the expansion anchor (10).

5. Anchor arrangement according to any one of the preceding claims,
**characterized in that**
the stopper (33) defines a remaining anchor rod advancement depth (dᵣ), which is between 0.25 times and 2.5 times the nominal diameter of the expansion anchor (10).

6. Anchor arrangement according to any one of the preceding claims,
**characterized in that**
the anchor rod (11) abuts against the stopper (33) and the stopper (33) abuts against the body (31).

7. Anchor arrangement according to claim 6,
**characterized in that**
the stopper (33) puts the anchor rod (11) under tension.

8. Anchor arrangement according to any one of the preceding claims,
**characterized in that**
the anchor rod (11) is monolithic.

9. Cap nut (30), in particular as part of an anchor arrangement according to any one of the preceding claims, the cap nut (30) comprising
- a body (31), which has a cavity (32) for accommodating the anchor rod (11) of an expansion anchor (10), and an internal screw thread (36), which projects into the cavity (32),
**characterized in that**
- the cap nut (30) further comprises a yielding stopper (33) that is configured to limit advancement of the anchor rod (11) into the cavity (32) of the cap nut (30) at low cap nut (30) torque and to yield to higher cap nut torque so as to permit the anchor rod (11) to advance deeper into the cavity (32).

10. Cap nut (30) according to claim 9,
**characterized in that**
the yielding stopper (33) is telescopically yielding.

11. Cap nut (30) according to any of claims 9 or 10,
**characterized in that**
the yielding stopper (33) consists of a plastic material.

12. Cap nut (30) according to any one of claims 9 to 11,
**characterized in that**
the body (31) has a hardness of 300 HV10 or larger.

13. Cap nut (30) according to any one of claims 9 to 12,
**characterized in that**
the body (31) has a flat top (38).

14. Anchor arrangement according to any one of claims 1 to 8, wherein the cap nut (30) is a cap nut (30) according to any one of claims 9 to 13.
